(19) Europäisches Patentamt
European Patent Office
Office européen des brevets

(11) Publication number: **0 007 239**
**B1**

(12) **EUROPEAN PATENT SPECIFICATION**

(45) Date of publication of patent specification: **19.01.83**

(51) Int. Cl.[3]: **C 25 C 7/02,** C 25 B 11/10, C 25 D 3/56, C 01 G 55/00

(21) Application number: **79301393.9**

(22) Date of filing: **13.07.79**

(54) **Insoluble electrode comprising an electrodepositated ruthenium-iridium alloy.**

(30) Priority: **14.07.78 US 924618**
**14.07.78 US 924631**
**14.07.78 US 924632**

(43) Date of publication of application:
**23.01.80 Bulletin 80/2**

(45) Publication of the grant of the patent:
**19.01.83 Bulletin 83/3**

(84) Designated Contracting States:
**BE DE FR GB IT NL**

(56) References cited:
**FR - A - 2 083 474**
**FR - A - 2 289 635**
**GB - A - 1 351 742**
**SU - A - 461 159**

(73) Proprietor: **INCO EUROPE LIMITED**
**Thames House Millbank**
**London SWIP 4OF (GB)**

(72) Inventor: **Scarpellino Jr., Anthony Joseph**
**Pine Hill Road**
**Maple Brook Tuxedo NY 10997 (US)**
Inventor: **McEwen, James**
**1 Grissom Avenue**
**Warwick NY 10990 (US)**
Inventor: **Borner, William Gerrard**
**105 Kendall Drive**
**Ringwood NJ 07456 (US)**

(74) Representative: **Greenstreet, Cyril Henry et al,**
**Thames House (Fifth floor) Millbank**
**London SW1P 4QF (GB)**

**EP 0 007 239 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Insoluble electrode comprising an electrodepositated ruthenium-iridium alloy

This invention relates to insoluble electrodes.

The electrodes of the present invention are particularly, but not exclusively, suited for use as insoluble anodes in the electrowinning of nickel and the description below is mainly concerned with such a process. However, the electrodes may also be employed for the electrowinning of other metals, e.g., copper, zinc, manganese, cobalt, cadmium, gallium, indium, and alloys thereof, e.g., nickel-cobalt alloys, and for other processes, e.g., for the electrolytic production of chlorine from brines, the dissociation of water, cathodic protection (e.g., in seawater or underground) and for battery electrodes.

For environmental reasons there has been much interest in using electrochemical techniques for extracting metals from ores. However one of the major problems associated with the electrowinning of metals concerns the development of satisfactory anodes. They must be good electrical conductors and resistant to chemical attack in the environment in which they are used; in addition they must be sufficiently strong to withstand normal handling in commercial use, and they must be effective for the desired reactions at the anode without interfering with the activity at the cathode. Economic factors such as the cost of the anodes, their durability and the power requirements associated with their use must also be considered.

In a typical nickel electrowinning process using insoluble anodes described by J. R. Boldt in "The Winning of Nickel", pp. 362—374 (1967), the electrolyte used is a purified leach liquor, which is essentially an aqueous solution of nickel sulphate, sodium sulphate and boric acid, and the anodes are made of rolled sheets of pure lead. The principal cathodic reaction is:

$$2(Ni^{++}+2e \longrightarrow Ni^{\circ})$$

The principal anodic reaction, leading to the release of oxygen, is:

$$2H_2O \rightarrow O_2+4H^{+}+4e$$

Lead and lead alloys have also been used as anode materials for electrowinning of metals other than nickel, e.g., copper and zinc. However lead has not been an entirely satisfactory anode material although lead alloys are often mechanically stronger and more resistant to certain corrosive environments used in electrowinning processes than pure lead; their operating potential is substantially higher than that of precious metal coated titanium anodes, and there is the ever present possibility of cathode lead contamination, because at open circuit lead dissolves and can then be deposited at the cathode.

Overall, very few material may be used effectively as anodes, especially in oxygen producing environments, because of the severe conditions. Graphite has been used—and its limitations are well known.

In recent years there has been considerable interest in replacing graphite electrodes used in the electrolytic production of chlorine from brines with platinum group metal-coated anodes. In general anodes of this type comprise metal substrates which are corrosion resistant and which possess and good electrical conductivity and which passivate in that they form protective surface films in certain electrolytes (sometimes known as "valve metals") bearing a coating containing at least one platinum group metal or platinum group metal oxide. The oxides are preferred because they are less corrosive than the elemental metals in the chloride and because there is reduced tendency to shorting in cells such as mercury cells. Particularly preferred are anodes having coatings comprised of a platinum group metal oxide and a base metal oxide. Such coatings have been characterised by terms such as mixed crystals, solid solutions, ceramic semi-conductors, etc. Examples of coatings are those containing $RuO_2$ alone or $RuO_2$ together with $IrO_2$, and/or Ir, as well as a valve metal oxide such as $TiO_2$.

Many techniques are known for preparing coatings containing platinum group metals. These include "painting" a $RuCl_3$ layer on to, for example, a titanium substrate and heating in air at a temperature of from 200 to 700°C as well as preparing $RuO_2$ coated electrodes by thermal oxidation of electrodeposited ruthenium. However it has been reported that such electrodeposited coatings are unsatisfactory from the point of oxygen potential and corrosion, the corrosion being evidenced by the appearance of a yellow colour in the solution, which is probably due to the formation of the yellow, volatile tetroxide, $RuO_4$ that is thought to be formed by the dissolution of ruthenium in acidic solution.

The platinum group metals do not all exhibit the same properties when used in electrolytic processes. Their behaviour will vary with electrolytic conditions and the reactions which occur. It has been found, for example, that anodes having an outer coating containing oxides of a platinum group metal and a value metal e.g. $RuO_2$ and $TiO_2$, which are commonly used in the production of chlorine, have a short life in electrowinning processes in which oxygen is produced at the anode. One major problem is that the electrode itself is passivated, and according to one theory the passivation is caused by penetration of oxygen through the outer coating into the conductive substrate, e.g., a valve metal.

Electrodes with barrier coatings between the active surface coating and the substrate conductors have been proposed but none is entirely satisfactory.

British Patent Specifications Nos. 1,351,741 and 1,351,742 are concerned with insoluble electrodes and particularly with electrodes comprising a substrate made of titanium, niobium or tantalum and an electrodeposited layer of a precious metal. It appears that problems are encountered when the layer of precious metal is electrodeposited on the substrate due to the passivating properties of the substrate. According to the Specifications, the problems can be overcome by applying to the substrate (or a layer of oxide of the substrate metal) a layer of paint comprising a chemical compound that contains a precious metal and that is capable of decomposing on firing to provide an under-layer of precious metal and/or an oxide thereof. According to the Specifications, once the paint has been fired, the desired electrodeposit of precious metal can be produced on the under-layer. Optionally, a further layer of paint may be applied to the precious metal electrodeposit to provide an outer coating of precious metal or precious metal oxide or both.

There is therefore a need for an insoluble electrode which can generally operate in a satisfactory manner in oxygen producing environments and which can therefore be employed in a variety of electrowinning operations including nickel electrowinning as well as in a variety of other applications.

The present invention satisfies this need in general by providing an additional layer between a barrier layer on a substrate and a ruthenium dioxide outer layer.

An insoluble electrode according to the invention comprises an electrically conducting substrate, a barrier layer on the substrate and a non-electroplated outer surface layer containing ruthenium dioxide, characterised in that an intermediate layer comprising a ruthenium-iridium electrodeposit which is at least partially oxidised is interposed between the barrier layer and the outer surface layer.

This electrode has been found to be especially useful for electrowinning, particularly nickel, where oxygen is evolved at the anode and highly acidic concentrations and elevated temperatures are encountered.

The substrate which must be electroconductive, should be of a material which will be resistant to the environment in which it is used. The substrate may be, for example, a valve metal or graphite. As stated above, the term "valve metal" (as applied to electrode materials) is defined as being corrosion resistant, electrically conductive metals which passivate, i.e., form protective films in certain electrolytes, for example, titanium, tantalum, niobium, zirconium, hafnium, molybdenum, tungsten, aluminium and alloys thereof. Titanium is a preferred substrate material because of its electrical and chemical properties, its availability, and, its cost relative to other materials with comparable properties. The configuration of the substrate is not critical. It is well known to use electrodes of varying shape and size, e.g., sheet, mesh, expanded metal, tubes, rods, etc. The substrate, for example titanium, may be if desired, a sheath on a more conductive metal such as copper, iron, steel, or aluminium, or combinations thereof.

In constructing the electrode, the substrate should be treated to clean, and preferably to roughen, the surface before any coating is applied. Cleaning includes, for example, removal of grease and dirt and also removal of any oxide skin that may have formed on the substrate. Roughening the surface of the substrate can be effected, for example, by etching or grit blasting and a particularly suitable technique is to grit blast using silica sand.

The barrier layer deposited on the substrate improves the durability of the electrode. It is believed to serve as an oxygen diffusion barrier for the substrate and/or to behave as a current carrying layer and/or to serve as a support layer to improve the quality and adherence of the electrodeposited layer. A principal function of the barrier layer is to preserve the current carrying capacity of the electrode in the presence of released oxygen. The barrier layer composition is advantageously one of the platinum group metals and gold or alloys, mixtures, intermetallics and oxides thereof. Preferably the barrier layer contains at least one of the platinum group metals palladium, platinum, irridium and rhodium. Palladium and iridium are preferred because they are effective in preserving the current capacity of the electrodes, possibly as barriers to oxygen transport, without any special treatment. Platinum is effective but requires an additional oxidising treatment, e.g., by soaking in an oxidising medium such as in concentrated $HNO_3$ or 0.1N $KMnO_4$. The use of rhodium, however, is not recommended because of its high cost.

It has also been found that silicides, nitrides and carbides of at least one component of the substrate are suitable as barrier layers. Standard techniques may be used to deposit such coatings on the substrate. These coatings tend to be orders of magnitude greater in thickness than the platinum group metal barrier layers. For example, a nitride coating may usefully be about 2 $\mu$m thick and a silicide layer may be about 250 $\mu$m thick.

In a preferred embodiment the electrode contains a palladium- or iridium-containing barrier layer adjacent to a valve metal substrate. The palladium layer also promotes adherence of the ruthenium-iridium intermediate electrodeposited layer to the substrate. The palladium or iridium can be deposited in any manner, e.g., by chemical or thermal decomposition from a solution or slurry deposited on the substrate, or by electroplating, electrophoresis, etc. Electroplating is preferred because it is convenient, inexpensive, rapid and neither labour nor time intensive compared to thermal decomposition, and it is easily controlled compared to, e.g., electrophoresis or chemical or vapour

deposition. The palladium layer should be at least 0.05 μm in thickness and the optimum thickness is about 0.2 μm. Generally, what is sought is sufficient metal to coat the substrate substantially completely. It has been found, for example, that a palladium deposit of 0.25 $mg/cm^2$ is a sufficient deposit to coat completely a sandblasted or otherwise roughened surface of the substrate. Iridium is more difficult to plate than palladium and it is more expensive. However, a flash coating of iridium serves as an effective barrier.

The outer surface layer containing ruthenium dioxide developed from a non-electrolytically deposited source is to ensure that even initially there is no loss of ruthenium anodically in use. Ruthenium dioxide is known to have a low oxygen over-potential, and its presence at the surface as an additional layer will also optimize the effectiveness of the material as an oxygen electrode. This in turn will enable the use of the electrode at a sufficiently low potential to minimize the possibility of initial dissolution of ruthenium. Other non-electrolytically active components may be present in the outer surface layer, e.g., for adherence, e.g., an oxide of substrate components such as $TiO_2$, $Ta_2O_5$ and the like. In a preferred embodiment of the invention the outer surface layer contains at least 80% $RuO_2$. In the embodiment in which a non-active component is present the outer surface layer contains 80% to 99% ruthenium dioxide and 1% to 20% of the non-active component, e.g., titanium dioxide. Suitable outer layers may contain for example, 80% $RuO_2$—20% $TiO_2$, 85% $RuO_2$—15% $TiO_2$, 90% $RuO_2$—10% $TiO_2$, 80% $RuO_2$—10% $TiO_2$—10% $Ta_2O_5$. It is believed, however, that the requirement for a non-active component such as a valve metal oxide is less critical and may even be eliminated in the present electrodes. The reason for this is that the thickness requirements of the outer (non-electrolytic) $RuO_2$ deposit is not as critical in the present electrodes as in conventional electrodes made entirely of a paint-type deposit. Conventional paint-type electrodes require a thickness build-up in sequential deposits that may be as high as eight coatings and higher, each with individual with firing steps. Since the $RuO_2$ (non-electrolytically deposited) layer can be thinner in the present electrodes, with no more than, for example, 1 or 2 coatings, the requirement for additional binders is lowered. Indeed durable anodes have been made using as the outer surface layer and a Ru—Ir layer, a $RuO_2$ developed from paints without any additional oxide component. Where resinates, or the like are used, some oxides may be derived from the usual commercial formulations, but such paint formulations can be applied without any additional oxides added.

Any non-electrolytic technique can be used for producing the ruthenium dioxide containing outer surface layer. Many methods are known, for example, for developing ruthenium dioxide coatings from aqueous or organic vehicles containing ruthenium values. For example, the ruthenium may be present as a compound such as a halide or resinate, which oxidises to ruthenium dioxide when subjected to a heat treatment in an oxidising atmosphere. Alternatively, ruthenium chloride in solution can be applied as a paint and the coating of ruthenium dioxide is formed by dechlorination and oxidation of the ruthenium chloride. For example, a solution of $RuCl_3 . 3H_2O$ in a suitable carrier may be applied on a previously coated and treated composite by brushing, spraying or dipping. A sufficient number of coats are applied to provide a ruthenium content of at least about 0.1 $mg/cm^2$ of electrode surface area. The coatings may be fired individually or each may be allowed to dry and the final coating fired. Firing is carried out, e.g. in air, at a temperature of about 315°C to about 455°C, e.g., for about 15 to about 60 minutes. Titanium or other non-active components may be co-deposited with the ruthenium using conventional techniques. Typically the initial loading (i.e. prior to build-up in use) of the $RuO_2$-containing outer layer is at least 0.1 $mg/cm^2$. Preferably, the initial loading is 0.3 to 1 $mg/cm^2$ in thickness. Since there is usually a build-up of $RuO_2$ during use in the cell, the initial thickness of $RuO_2$ is to ensure that precious metals of the intermediate layer do not dissolve before the proper build-up of $RuO_2$ can occur and to ensure a low oxygen overpotential in the cell. In this way precious metal loss is minimized.

The ruthenium-iridium layer must be deposited in the metallic state by an electrodeposition technique. This is particularly advantageous because a metallic coating of suitable thickness can be deposited in one operation, a layer of uniform composition can be formed, and the deposit can be formed rapidly, in a manner which is neither time nor labour intensive compared to chemical or thermal decomposition techniques. Although it is possible to deposit separate layers of a ruthenium and iridium using individual plating baths and diffuse them thermally, it is preferred to co-deposit the ruthenium and iridium. While this invention is not confined to any particular electroplating method for producing the co-deposit, it is preferred that the ruthenium-iridium layer is electrodeposited from a bath comprising an aqueous solution containing a soluble ruthenium compound, a soluble iridium compound, a soluble fluoborate salt and fluoboric acid.

It has in general been found that a bath containing controlled amounts of both a soluble fluoborate and fluoboric acid can be usefully employed to form adherent, coherent, reproducible ruthenium and iridium alloy co-deposits containing controlled amounts of iridium. Such baths are generally long lasting and stable over a wide ratio of ruthenium-iridium compositions and deposits can be formed which are substantially crack-free on visual examination and at a magnification of 500× at deposit thickness equivalent in a loading of up to at least about 2 $mg/cm^2$.

The baths are aqueous solutions of the soluble ruthenium and iridium components and a soluble fluoborate salt, fluoboric acid, and the bath can also optional contain sulphamic acid. In general, the baths can conveniently contain:

| Ingredient | g/l |
|---|---|
| Ru | 1—12 |
| Ir | 1—12 |
| $NaBF_4$* | 10—200 |
| $HBF_4$ | 1—100 |
| $NH_2SO_3H$ | 0 to 2 times the Ru+Ir Conc. |

(* or equivalent fluoborate salt)

The bath may additionally contain other additives well known in the art: for example boric acid and/or doping agents. Boric acid is known to prevent hydrolysis of $HBF_4$ to HF.

Advantageously, the baths can be designed to give the desired levels of iridium in the alloy deposited, ranging from very small but effective amounts, e.g. to improve the quality of the deposits and/or corrosion resistance up to about 36 weight percent. The fluoborate salt and the fluoboric acid are major factors in controlling the level of iridium in the deposit and in controlling the quality of the deposit. The concentrations of such components used for such control are interrelated to each other and to the precious metal concentrations in the bath.

The fluoroborate salt functions at least as a current carrier in the bath and it can be used to regulate the viscosity of the bath. It also affects the quality of the deposit, as will be shown below. The fluoborate salt can be, e.g., an alkali metal or ammonium fluoborate. Preferably, for reasons of cost, sodium fluoborate is used. Based on sodium fluoborate, the concentration of fluoborate salt is equivalent to 10 g/l to 200 g/l sodium fluoborate, preferable amounts will depend on the compositional design of the bath, but in general the bath will preferably contain at least 25 g/l equivalent of fluoborate salt. For a bath depositing about 2—4 weight percent iridium in the alloy, the bath will preferably contain 25 to 150 g/l, e.g., about 100 g/l. Suitably, the bath will have a density of about 1.043 to 1.038 g/cm$^3$ (6 to 8 Bé°).

The fluoboric acid level can be used to control the level of iridium in the deposit. Its presence also improves the quality of the deposits. Without fluoboric acid deposits are severely cracked. When added the cracks are reduced materially. In general fluoboric acid is present in an amount of about 1 to about 100 g/l. Preferable amounts will depend on the design of the bath for a particular deposit. To obtain 2—4 weight percent iridium in the deposit, the bath will preferably contain, at least 5 g/l, e.g,, 5 to 50 g/l, more preferably 10 to 40 g/l fluoboric acid.

Generally, ruthenium is present as a soluble compound, and preferably a salt containing ruthenium in the form of a complex anion $[Ru_2N(H_2O)_2Y_8]^{3-}$ (often referred to as RuNC) e.g., the ammonium salt, $[Ru_2N(H_2O)_2Y_8]\ (NH_4)_3$, wherein Y=either a chloro or bromo group, is employed. Examples of other ruthenium salts that may be used are halides and sulphamates.

Generally, iridium is present as a soluble compound and preferably as a compound which is prepared by refluxing a diammonium hexahalo salt of iridium and sulphamic acid in an aqueous environment for a period of time sufficient to permit, after distillation and cooling of the refluxing product, the formation of a precipitate.

Use of $(NH_4)_2IrCl_6$ in particular generally requires a refluxing time of at least 30 hours, for example, at least about 50 hours or above 70 hours following which an olive green precipitate is formed after distillation and cooling.

The precipitate is preferably washed throughout, for example until it is substantially uniformly green in colour. The iridium product is soluble in water to some extent and to minimise dissolution the washing is preferably carried out below room temperature, for example between 0 and 5°C.

The iridium product has a melting point above 350°C. Differential thermogravimetric analysis (DTG) in air shows that the product has a weight loss of about 46% from room temperature to 600°C. DTG analysis on $(NH_4)_2IrCl_6$ shows about a 61% weight loss under the same conditions.

Examples of other iridium compounds that may alternatively be employed in the baths are iridium sulphamates and iridium halides.

While the bath may contain relatively large amounts of ruthenium and iridium, it is preferred to keep the precious metal content of the bath at a low level. This will prevent the loss of metal due to drag out and in addition it is less costly to operate with lower precious metal inventories. In preferred baths, the ruthenium and iridium contents are less than 12 g/l, respectively, and preferably 3 to 10 g/l, respectively. The ratio of ruthenium to iridium in the bath, surprisingly, can be varied widely without affecting the ratio of iridium in the deposit. Since the ruthenium is deposited at a faster rate than iridium, this permits the bath to be usable for a particular alloy composition even though the bath composition is changing. In general, however, the initial bath can usefully contain ruthenium and iridium in approximately a 1:1 weight ratio. The electrolyte can be replenished as necessary by adding a solution with ruthenium and iridium in concentrations equivalent to the composition of the deposit.

Sulphamic acid serves as a stress reliever of the deposit. It is optional, but preferably present in the bath in a ratio of 0.1:1 up to 2:1 of sulphamic acid:total weight Ru+Ir and preferably this ratio is about 0.5:1.

The electrodeposition process can be carried out at a temperature in the range of room temperature up to 95°C, preferably 50 to 70°C and at a cathode current density of about 5 to 120 mA/cm$^2$, preferably about 20 to 100 mA/cm$^2$.

The pH of the bath is important. If it is not maintained within certain tolerable limits, iridium will not co-deposit. The optimum pH range is 0.3 to 1.5, preferably 0.9 to 1.3. The pH is maintained, advantageously, with fluoboric acid or sulphamic acid.

The electrodeposition process can be operated at such conditions to co-deposit iridium and ruthenium containing 0.1 to 36% iridium. As indicated above, the bath can be designed to provide a specific iridium content in the deposited alloy.

Major advantages of the process are that reproducible coatings can be deposited over wide ranges of Ru:Ir ratios in the bath, the baths can be operated for a longer period of time without adjustment, the iridium level can be controlled at a low but effective level for a desired effect and that iridium can be co-deposited with ruthenium. Moreover, adherent and coherent ruthenium-iridium alloys can be deposited.

The ruthenium-iridium deposits usefully have a thickness of 0.1 to 4 or 5 $\mu$m, preferably 0.5 to 2 $\mu$m and an optimum thickness of about 1 $\mu$m. Thicknesses below 0.1 $\mu$m tend not to be continuous and too much of the substrate is exposed.

As noted above, electroplated ruthenium per se will corrode rapidly at the anode at potentials for oxygen evolution, passing into the acid solution in the octavalent state at potentials greater than about 1.1 V (measured against a saturated calomel electrode). This is both costly—in terms of loss of expensive precious metal—and a hazard in that there is a potential for vaporization of $RuO_4$. It has been found that the iridium addition in the electrodeposited intermediate layer suppresses the dissolution of ruthenium. The level of iridium addition which is effective depends on the conditions under which the anode is used. Very small additions of iridium have a marked effect in suppressing the ruthenium dissolution. For example, in an accelerated life test in sulphuric acid at a current density of 500 mA/cm$^2$ and ambient temperature, roughly 1 weight % iridium addition increased the anode life from 1 hour (without iridium addition) to at least 11 hours, and even as high as 95 hours, and similarly 2 weight % iridium further increased the anode life. The iridium content of the intermediate layer is typically in the range of 0.1% e.g. from 1%, up to 36%. For reasons of cost, it is preferable to keep the iridium level as low as possible consistent with achieving optimum life for the electrode.

For electrowinning of nickel, e.g. at current densities of the order of 30 to 50 mA/cm$^2$ and temperatures of 55° to 80°C, very small additions of iridium are effective. In an advantageous embodiment of the invention for use at current densities up to about 50 mA/cm$^2$, the level of iridium in the electrodeposited layer is at least and preferably greater than 1% e.g., from 2% to 4%. For example, in anodes having an outer layer of non-electroplated $RuO_2$, there is no observable dissolution of ruthenium with an iridium level of about 4 weight %. When used for current densities greater than 50 mA/cm$^2$, the iridium level is preferably at least about 2%. Without the $RuO_2$ outer layer it would appear that more than 4% iridium is required e.g., 7%, to prevent ruthenium dissolution. Even at the higher levels of iridium, e.g., 7%, the metallic electrodeposited layer must be subjected to an oxidizing treatment to oxidise the surface at least partially. In general, where more severe electrolysis conditions are used, a greater amount of iridium may be necessary to suppress ruthenium dissolution.

It was noted that even with the anodes where the iridium content was not sufficiently high for ruthenium dissolution to occur initially, in use anodically an oxide coating builds up which eventually protects the coating and prevents further dissolution of the ruthenium. However, to avoid the initial dissolution and to avoid the hazard of $RuO_4$ formation, a ruthenium dioxide-containing coating—formed by a non-electrolytic treatment—must be provided on the surface of the electrode.

Before depositing the outer surface layer on the ruthenium-iridium intermediate layer, however, the ruthenium-iridium layer is treated in air so that the surface of the intermediate layer is at least partially oxidized. By this is meant that the surface of the intermediate layer is partially or wholly oxidized with or without partial or whole oxidation beneath the surface to any depth in the intermediate layer. Surface oxidation can be carried out at a temperature 400°C to 900°C in an atmosphere which is oxidizing to the deposit. Air is preferred.

Preferably, heat treatment of the intermediate layer is carried out at about 400°C to about 700°C, e.g., about 593°C for 5 to 60 minutes, e.g., about 15 minutes. Surface oxidation need only be carried out to provide an observable colour change of metallic to violet. This is an evidence of surface oxidation. It is known that various oxides will develop at least at the surface of ruthenium and iridium when subjected to such oxidation treatment. The ruthenium-iridium electrodeposited layer clearly oxidizes at least at the surface. A predominant phase present is $RuO_2$, which may be in solid solution with other oxides which develop at the surface.

By way of example to demonstrate the use of electrodes of the invention in the electrowinning of nickel in particular, such electrowinning commonly uses electrolytes containing 40 to 100 g/l nickel, 50 to 100 g/l sodium sulphate and up to 40 g/l boric acid in sulphuric acid to maintain a pH in the range of 0 to 5.5. In one specific electrowinning process the anode is bagged, and the anolyte is a sulphate solution containing about 40 to 70 g/l nickel (as nickel sulphate), 40 g/l sulphuric acid, 100 g/l sodium sulphate, 40 g/l boric acid, and the anolyte is maintained at a pH of about 0. Electrowinning is carried

out advantageously at a temperature of 50° to 70°C and at an anode current density of 30—50 mA/cm$^2$.

The following examples are intended to give those skilled in the art a better appreciate of the invention. In all the tests, anode potentials are measured in volts vs. a saturated calomel electrode (SCE) and H/T is an abbreviation to denote the conditioning of the layer of a composite sample, namely the temperature, time, and atmosphere. Loadings, e.g. of precious metals or their oxides, alloys, etc. in various layers are given as nominal values.

Some Examples are now given to illustrate the invention; Example 1 describes the production of a novel iridium compound for use in making the electrode of the present invention, Examples 2 to 8 describe a process of electrodepositing a ruthenium-iridium alloy for use in making the electrode of the present invention and Examples 9 to 16 describe electrodes in accordance with the present invention and their manufacture and use in particular.

Example 1

A. 25 g of $(NH_4)_2IrCl_6$ and 60 g of $NH_2SO_3H$ were dissolved in 600 cm$^3$ of distilled water. The solution was refluxed continuously for 71 hours. Then 550 cm$^3$ of the refluxed solution was distilled off. The distillate was a clear, colourless solution which gave a positive test for $Cl^-$ ion when $AgNO_3$ was added. The remainder of the solution was dark murky green, which upon cooling produced a thick precipitate, which was collected on filter paper and washed several times with ice water. After air drying, it was transferred to a desiccator to dry and resulted in approximately 11 g of an olive green salt. The filtrate and rinse water will yield more of this green salt, but only after considerable standing or by reduction of the volume by another distillation. The iridium contents of two different preparations were 44.4% and 45.1%. X-ray diffraction analysis of these salts gave a similar pattern, which was different to that of $(NH_4)_2IrCl_6$, the starting material. It appears from the infrared spectrograph of the green salt that $H_2O$ is present, but no Ir—N—Ir bridge. Chemical analysis shows it to contain 44.4% Ir, 41.1% Cl, 5.3% N, 5.1% O, 4.12% $NH_4$, 0.71% $H_2O$, and the presence of H. No S is present. Its melting point is above 350°C.

B. The above procedure was repeated except that the solution of diammonium hexahalo iridium (IV) in sulphamic acid was refluxed for only 30 hours. X-ray diffraction analysis on a black precipitate obtained after distillation and filtration showed it to be the diammino iridium salt, i.e. the diammonium iridium salt did not react in this time period.

Example 2

This Example illustrates the effect of iridium additions to a ruthenium sulphamate bath.

To an aqueous bath containing 2 to 3 g/l of $[Ru_2N(H_2O)_2Cl_8]$ $(NH_4)_3$ (known as Ru NC) the reaction product of the refluxed diammonium hexachloro iridium IV salt, as prepared in Example 1, was added in amounts to make up baths containing approximately 10%, 20%, 30%, 40%, 50%, 70% and 90%, by weight of iridium. At a plating temperature of 55°C, and a current density of 20 mA/cm$^2$ it was found that at a concentration of about 45% iridium in the bath, the level of iridium in the alloy deposit reached a maximum of about 15% by weight. Thereafter, the percentage of iridium in the deposit levelled off. Increasing the amount of iridium over 45 weight percent in the bath tested, did not therefore increase the amount of iridium in the deposit.

Example 3

This Example illustrates the relationship between the iridium, fluoborate, and fluoboric acid contents of the baths and the level of iridium in the deposited alloys.

A series of plating baths were prepared as aqueous solutions containing ruthenium, iridium, sodium fluoborate, fluoboric acid and sulphamic acid. All baths were prepared using the iridium salt made as described in Example 1 and $[Ru_2N(H_2O)_2Cl_8]$ $(NH_4)_3$, to give a 1 to 1 weight ratio of ruthenium and iridium in the baths; the sulphamic acid concentration in each bath was 6 to 7 g/l but the other bath components were varied relative to each other. The baths had an initial pH of from about 1.2 to 0.5 and deposits of ruthenium-iridium alloys were produced at 55°—60°C and 20 mA/cm$^2$ on a copper substrate using a platinum anode. The deposited alloys were analyzed for iridium content by x-ray fluorescence. The results are tabulated in Tables I and II.

Table I shows the effect of variations in iridium and fluoboric acid concentrations in baths containing 25 g/l $NaBF_4$. Table II shows the effect of variations in iridium and fluoboric acid concentrations in the baths at various levels of $NaBF_4$.

TABLE I

$NaBF_4$=25 g/l
Ru:iR=1:1

| Test | Bath: Ir/HBF4 Weight | Bath: Ratio | Deposit: Ir in alloy % by weight |
|---|---|---|---|
| A | $\frac{3.08}{.66}$ | 4.65 | 16.6 |
| B | $\frac{3.08}{10.46}$ | 0.29 | 4.0 |
| C | $\frac{6.16}{10.46}$ | 0.59 | 9.4 |
| D | $\frac{6.16}{20.3}$ | 0.30 | 2.1 |

TABLE II

| Test | Bath: Ir/HBF4 Weight | Bath: Ratio | Bath: NaBF4 g/l | Deposit: Ir in alloy % by weight |
|---|---|---|---|---|
| A | $\frac{3.08}{0.66}$ | 4.65 | 25 | 16.6 |
| B | $\frac{3.08}{10.46}$ | 0.29 | 25 | 4.0 |
| E | $\frac{3.08}{3.31}$ | 0.93 | 50 | 14.8 |
| F | $\frac{3.08}{13.11}$ | 0.23 | 50 | 6.8 |
| G | $\frac{3.08}{21.46}$ | 0.14 | 50 | 3.4 |
| H | $\frac{3.08}{4.39}$ | 0.70 | 75 | 23.2 |
| I | $\frac{3.08}{14.0}$ | 0.22 | 75 | 8.1 |
| J | $\frac{3.08}{33.50}$ | 0.09 | 75 | 6.0 |
| K | $\frac{3.08}{0.33}$ | 9.29 | 100 | 17.4 |
| L | $\frac{3.08}{9.60}$ | 0.32 | 100 | 5.4 |
| M | $\frac{3.08}{39.02}$ | 0.08 | 100 | 1.8 |

The data in Tables I and II show the interrelationship of the concentrations of Ir, $NaBF_4$ and $HBF_4$, and from such data a bath composition can be optimized to give the desired deposit for a particular application.

Example 4

Plating baths were prepared using ruthenium and iridium components prepared as described in Example 2, and with the ruthenium and iridium in a weight ratio of 1 to 1, to give ruthenium-iridium deposits containing various amounts of iridium. Typical baths and plating conditions are shown in Table III.

TABLE III

| | | Bath I | Bath II | Bath III | Bath IV |
|---|---|---|---|---|---|
| A | Composition, (g/l) | | | | |
| | Ru | 8—9 | 8—9 | 3—4 | 3—4 |
| | Ir | 8—9 | 8—9 | 3—4 | 3—4 |
| | $NaBF_4$ | 100 | 100 | 75 | 75 |
| | $HBF_4$ | 30 | 20 | 14 | 4 |
| | $NH_2SO_3H$ | 7 | 7 | 6—7 | 5—7 |
| B | Plating Conditions | | | | |
| | current density ($mA/cm^2$) | 30 | 30 | 20 | 20 |
| | T (°C) | 70 | 70 | 60 | 60 |
| | pH | 0.9 | 0.8 | 0.9 | 1.2 |
| C | Ir in Deposit | | | | |
| | % by weight | 3—4 | 5—6 | 8—9 | 23—24 |

Example 5

This Example illustrates the effect of current density and temperature on the iridium content of the deposit.

Using a bath of the following composition

| Ingredients | g/l |
|---|---|
| Ru | 1—2 |
| Ir | 1—2 |
| $NaBF_4$ | 100 |
| $HBF_4$ | 10 |
| $NH_2SO_3H$ | 7 |

the plating conditions were varied, e.g.:

A at a temperature of 60°C and pH of 1.0, varying the cathode current density from 1—100 $mA/cm^2$

B at a cathode current density of 30 $mA/cm^2$, varying the temperature from 20 to 70°C.

Results, tabulated in Tables IV and V show that the % iridium deposited increases with both increase in temperature and increase in current density, respectively.

TABLE IV

| Current density ($mA/cm^2$) | Iridium in deposit (% by weight) |
|---|---|
| 10 | 0.7 |
| 20 | 1.1 |
| 30 | 1.6 |
| 40 | 1.8 |
| 50 | 2.2 |
| 60 | 2.7 |
| 70 | 3.0 |
| 80 | 3.7 |
| 90 | 3.8 |
| 100 | 4.7 |

TABLE V

| Temperature (°C) | Iridium in deposit (% by weight) |
|---|---|
| room temperature | <0.1 |
| 38 | 0.1 |
| 46 | 1.1 |
| 56 | 2.5 |
| 70 | 6.6 |

Example 6

This example illustrates the use of various ruthenium and iridium salts as components of the bath.

In the tests outlined below the specific ruthenium and iridium salts used to prepare the bath, the bath composition and plating conditions are given. All deposits are on a copper substrate. In all test samples the ruthenium-iridium alloy deposit is heat treated in air for 15 minutes at 593°C before use in an accelerated life test. The results include the concentration of iridium in the ruthenium-iridium alloy deposit and observations on the quality of the deposits. "cd" is the current density and "ALTC" refers to accelerated life test which is carried out at 500 mA/cm$^2$ at ambient temperature in 1N $H_2SO_4$. The life is based on hours to 10V cell voltage and the results given related to the precious metals loading.

1 Salts: $RuCl_3 . 3H_2O$ and $(NH_4)_2IrCl_6$

A. Bath Composition

| | |
|---|---|
| Ru | =3—4 g/l |
| Ir | =3—4 g/l |
| $NaBF_4$ | =100 g/l |
| $HBF_4$ | =10 g/l |
| $NH_2SO_3H$ | =6—7 g/l |

B. Plating Conditions

| | |
|---|---|
| cd | =20 mA/cm$^2$ |
| T | =60°C |
| pH | =0.5 |

C. Results

1. [Ir], in alloy=7.0%
2. The deposit was *not* adherent

2. Salts: $RuCl_3 . 3H_2O$ and $IrCl_3$

A. Bath Composition

| | |
|---|---|
| Ru | =3—4 g/l |
| Ir | =3—4 g/l |
| $NaBF_4$ | =100 g/l |
| $HBF_4$ | =10 g/l |
| $NH_2SO_3H$ | =6—7 g/l |

B. Plating Conditions

| | |
|---|---|
| cd | =20 mA/cm$^2$ |
| T | =60°C |
| pH | =0.7 |

C. Results

1. [Ir], in alloy=26—1/2%
2. Light, very shiny deposit, finely cracked at 500x at 1.4 mg/cm$^2$ loading.
3. ALTC: 55 hr/mg.

3. Salts: RuNC and $IrCl_3$

A. Bath Composition

| | |
|---|---|
| Ru | =3—4 g/l |
| Ir | =3—4 g/l |
| $NaBF_4$ | =100 g/l |
| $HBF_4$ | =10 g/l |
| $NH_2SO_3H$ | =6—7 g/l |

B. Plating Conditions
cd =20 mA/cm$^2$
T =60°C
pH =0.9

C. Results
1. [Ir], in alloy=21.3%
2. Matte-grey deposit, under 500×, nodular in appearance.
3. ALTC: 426 hrs/mg.

4. Salts: RuNC and $(NH_4)_2IrCl_6$

A. Bath Composition
Ru =3—4 g/l
Ir =3—4 g/l
$NaBF_4$ =100 g/l
$HBF_4$ =10 g/l
$NH_2SO_3H$ =6—7 g/l

B. Plating Conditions
cd =20 mA/cm$^2$
T =60°C
pH =0.9

C. Results
1. [Ir], in alloy=1.7%
2. Deposit metallic
3. White turned light violet when treated
4. ALTC: 25 hrs/mg.

The results are included merely to indicate that iridium does plate out with ruthenium using a variety of compounds of iridium and ruthenium. However, it should be noted that the examples do not represent optimized baths.

Example 7

Baths were prepared and deposits made substantially as described in Example 3, except that the deposits are made on titanium. The composite Ru—Ir on Ti materials were treated at 593°C in air for 15 minutes and then subjected to a screening test (ALTC) in 1N $H_2SO_4$ at ambient temperature and an anode current density of 500 mA/cm$^2$. Results are tabulated in Table VI, which gives variations in compositions of the baths, the percentage by weight of iridium in the deposits and the hours to 10 volts cell voltage in the screening test.

TABLE VI

| | Bath | | | Deposit | |
|---|---|---|---|---|---|
| Test | $Ir/HBF_4$ Weight | Ratio | $NaBF_4$ g/l | Ir in alloy % by weight | Performance ALTC hours to 10 Volts |
| N | $\frac{3.08}{9.27}$ | 0.33 | 0 | 7.8 | 15 |
| O | $\frac{3.08}{10.46}$ | 0.29 | 25 | 4.0 | 91 |
| P | $\frac{3.08}{3.11}$ | 0.23 | 50 | 6.8 | 90 |
| Q | $\frac{3.08}{14.10}$ | 0.22 | 75 | 8.1 | 112 |
| S | $\frac{1.38}{9.8}$ | 0.14 | 150 | 11.0 | 178 |
| T | $\frac{1.38}{9.8}$ | 0.14 | 200 | 12.0 | 27 |

Generally, for every given Ir/$HBF_4$ ratio, as the concentration of $NaBF_4$ increases the percentage by weight of Ir in the alloy deposit increases. However, the performance of deposits as anodes goes through a maximum at about 100 g/l $NaBF_4$.

This suggests that the level of $NaBF_4$ in the bath should be controlled, e.g. at about 100 g/l, for optimum performance when the deposit from the bath is to be used as an anode material in particular.

Example 8

A titanium substrate was sandblasted with No. 2 sand to roughen the surface and to prime the surface with embedded silica. The sandblasted substrate was brushed with pumice, rinsed, cathodically cleaned in 0.5 M $Na_2CO_3$ to remove dirt and adhering pumice particles, rinsed, dried and weighed. Before plating the surface was water-rinsed and placed in the following plating bath prepared using the ruthenium and iridium components described in Example 2:

| Ingredients | g/l |
|---|---|
| Ru | 3—4 |
| Ir | 3—4 |
| $NaBF_4$ | 25 |
| $HBF_4$ | 10 |
| $NH_2SO_3H$ | 6—7 |
| $H_3BO_3$ | 10 |

Plating was carried out at a temperature of 60°C, pH=1, and a current density of 20 mA/cm$^2$ to form a coherent, adherent co-deposit of ruthenium and iridium as an alloy containing 12 weight percent iridium and having a loading of about 1 mg/cm$^2$. The deposit was bright metallic.

The Ru—Ir coated titanium was heat treated in air for 15 minutes at 593°C to oxidize at least the surface of the co-deposit. This initial oxidation was evidenced by a colour change from metallic to light violet.

After oxidation the electrode was tested at conditions which simulate nickel electrowinning at high temperature. The electrolyte was made up of 60 to 80 g/l nickel (as nickel sulphate), 40 g/l sulphuric acid, 100 g/l sodium sulphate and 10 g/l boric acid. With the electrolyte temperature at 70°C, the pH of about 0 to 0.5 and at an anode current density of about 30 mA/cm$^2$, the life of the electrode was over 3600 hours at a working potential of 1.27—1.31 volts/SCE.

Example 9

This example illustrates the preparation of typical electrodes of the invention, in which the barrier layer is palladium, and the activity of such electrodes when used as anodes for the electrowinning of nickel.

Surface roughened titanium sheet was cleaned and plated with a thin coating of a precious metal as a barrier layer. To roughen and clean the titanium it was sandblasted with $SiO_2$-sand, brushed with pumice, rinsed, cathodically cleaned in 0.5 M $Na_2CO_3$ to remove dirt and the remaining pumice particles then rinsed and dried. Thereafter, the cleaned substrate was plated with a thin deposit of palladium, the amount varying from about 0.1 to about 0.6 $\mu$m, using known electroplating baths. In some of the samples the palladium deposit is subjected to special treatment. For example, the palladium coated-titanium in some samples was subjected to a temperature of 593°C for 1 hour in an atmosphere of 5% $H_2$—95% $N_2$. However, it was found during the course of investigating the materials that such treatment could be eliminated without noticeable harmful effects to the electrode life or performance.

A ruthenium-iridium intermediate, e.g. of about 0.5 to about 4 $\mu$m thickness, was plated on the palladium layer from a sulphamate bath of the type described in Example 2 to give a deposit containing about 4% iridium and the balance ruthenium. The bath was maintained at a pH of 0.9 and a temperature of 57°C and operated at a current density of 20 mA/cm$^2$. The ruthenium iridium deposit was treated in air at a temperature of about 500 to 600°C for about 10 to 20 minutes to oxidize the surface.

A surface $RuO_2$ layer was applied to each sample by painting the composite with 2 coats of a solution of $RuCl_3 . 3H_2O$ in n-butanol. After each application the electrode was dried under a heat lamp (about 65—93°C) to obtain a ruthenium chloride loading of about 1 mg/cm$^2$, and then the composite was heat treated in air for 60 minutes at about 450°C to about 600°C in order to convert the chloride to the dioxide of ruthenium.

A uniform, blue-black coating resulted which was adherent when finger rubbed, but not completely adherent when subjected to a tape test involving firmly applying a strip of tape to the coating and rapidly stripping it and ascertaining whether any of the coating had been pulled off.

The samples were tested as anodes under conditions which simulated the anolyte in a bagged-anode nickel electrowinning, viz. an aqueous electrolyte composed of 70 g/l nickel (as nickel sulphate), 40 g/l sulphuric acid, 100 g/l sodium sulphate, and 10 g/l boric acid. The bath was maintained at a

temperature of 70°C, a pH of 0 to 0.5, and an anode current density of 30 mA/cm$^2$. The tests were arbitrarily terminated when the anode potential reaches 2 volts (vs. SCE).

Life of typical samples are given in Table VII, with variations in preparation of the sample noted.

The data in Table VII show that anodes of the present invention are effective for electrowinning nickel, and further that current densities of 30 mA/cm$^2$ the anodes operate at very stable potentials in the neighbourhood of about 1.19 to 1.4 volts/CSE.

Example 10

This Example illustrates the effect of various treatment conditions on the outer coating and on the intermediate layer of composite anodes. The anodes are not in accordance with the invention because of the absence of a barrier layer but the results are useful in determining factors involved in the outer and intermediate layers of anodes of the invention.

TABLE VII

| Sample I.D. | Barrier layer conditioning | Intermediate layer conditioning | Surface layer conditioning | Anode potential and life to 2 volts vs. SCE |
|---|---|---|---|---|
| 1 | 0.1 μm Pd<br>* | 0.5 μm Ru—Ir<br>593°C—15 m—air | 0.7 mg/cm² $RuO_2$<br>455°C—60 m—air | 1.19—1.37V up to 4000 Hours<br>2V at 4200 Hours |
| 2 | 0.1 μm Pd<br>— | 1 μm Ru—Ir<br>593°C—15 m—air | 0.5 mg/cm² $RuO_2$<br>453°C—30 m—air | 1.16—1.36V up to 9330 Hours<br>** |
| 3 | 0.1 μm Pd<br>— | 2 μm Ru—Ir<br>593°C—15 m—air | 0.5 mg/cm² $RuO_2$<br>453°C—30 m—air | 1.16—1.38V up to 9640 Hours<br>** |
| 4 | 0.5 μm Pd<br>* | 0.6 μm Ru—Ir<br>593°C—15 m—air | 0.5 mg/cm² $RuO_2$<br>453°C—30 m—air | 1.19—1.38V up to 3850 Hours<br>2V at 4180 Hours |
| 5 | 0.5 μm Pd<br>— | 1.3 μm Ru—Ir<br>593°C—15 m—air | 0.6 mg/cm² $RuO_2$<br>453°C—30 m—air | 1.22—1.38V up to 6520 Hours<br>2V at 6860 Hours |

— —no conditioning treatment.
* —heat treated at 593°C for 1 hour in 5% $H_2/N_2$.
** —still in test.
SCE—Saturated Calomel Electrode.

A. Effect on outer layer

Composite samples without barrier layers are prepared in a similar manner to that shown in Example 9 except that the final heat treatment in air of the $RuCl_3 . 3H_2O$ deposit was varied with respect to time and temperature. The samples were allowed to stand in 1N $H_2SO_4$, at temperatures up to 70°C. Tables VIII—A shows the effect of variations in heat treatment of the $RuO_2$ layer on the anode.

TABLE VIII—A

| Treatment | | |
|---|---|---|
| Temperature, °C | Time, min | Effect |
| 260 | 15—60 | Dissolution |
| 315 | 30 | Stable |
| 370 | 30 | Stable |
| 425 | 15—60 | Stable |
| 455 | 30 | Stable |

The results show that at a temperature-time cycle which does not convert the ruthenium chloride deposit to the oxide, the coating will dissolve immediately on contact with the acid. Coating adherence improves with higher heat treatment temperatures, at 455°C, the adherence being demonstrably better than at 315°C. The optimum time of heat treatment, as determined by tape tests, was about 30—60 minutes.

B. Effect of temperature-time on intermediate layer

Samples were prepared by plating a Ru—4% Ir alloy deposit on to a sandblasted, pumiced and cathodically cleaned titanium substrate. The ruthenium-iridium layer was subjected to various temperature-time cycles in the air. Thereafter the composites were tested as anodes in 1N $H_2SO_4$ as electrolyte, ambient temperature and at an anode current density of 5000 $A/m^2$. Table VIII—B shows the effects of heat treatment conditions on the anode.

TABLE VIII—B

| Heat treatment conditions | Time in hours to cell potential of 10 volts |
|---|---|
| 426°C—1 hr—air | 3 |
| 593°C—15 min—air | 150 |
| 593°C—30 min—air | 144 |
| 704°C—1 hr—air | 36 |

The results in Table VIII show the preferred temperature-time cycle for heating the alloy is that equivalent to 593°C for 15 to 30 minutes. At 704°C for 1 hour the integrity of the co-deposit was damaged and the substrate was unduly oxidized. At 426°C for 1 hour insufficient oxide was formed.

C. Effect of atmosphere on alloy layer

Samples were prepared in a similar manner to those prepared in part B of this example except that the atmosphere of the heat treatment of the ruthenium-4 weight % iridium alloy layer was varied. The composites were used as anodes in a simulated nickel electrowinning bath, substantially as described in Example 9, except that the bath was maintained at 55°C. Table VIII—C gives a comparison of an electrode prepared by heat treating the alloy layer in an atmosphere of essentially pure $O_2$ with one treated in air.

TABLE VIII—C

| Heat treatment | Time in hours to anode potential of 2 volts |
|---|---|
| 593°C—15 min—$O_2$ | 3200 |
| 593°C—15 min—air | 4200 |

Example 11

This example illustrates the effect of the addition of titanium to the ruthenium oxide outer layer.

A composite was prepared in a similar manner to that shown in Example 9, except that titanium chloride in the amount of 15 weight %, based on the weight of titanium, was added to the $RuCl_3 . 3H_2O$ solution, and the ruthenium coating solution was made with methanol rather than butanol.

The ruthenium chloride solution used to deposit the outer layer was prepared by dissolving $RuCl_3 . 3H_2O$ and an aqueous solution of $TiCl_3$ (20%) in methanol such that the ruthenium to titanium weight ratio was 85:15. The titanium was oxidized to the titanic (+4) state by the addition of $H_2O_2$. The resultant ruthenium- and titanium-containing solution was applied to the oxidized ruthenium-iridium alloy layer by applying several coats until the loading averaged 1.2 mg/cm$^2$. Each coat was allowed to dry under a heat lamp (65—93°C) before the next was applied. After applying the final coat the electrode was heated in air for 30 minutes at 454°C. The resultant material had a blue-black outer layer that had good adherence, showing only slight coating lift-off in a tape test. Data for the tests are shown in Table IX.

When tested in a simulated nickel electrowinning recovery cell, anodes of this type showed an initial anodic potential substantially equivalent to that shown by coatings having a surface layer developed from a $RuCl_3 . 3H_2O$ paint containing no $TiCl_3$. The lift in Table IX was shorter than the life for comparable electrodes without $TiO_2$ in Table VII. Possibly the coating technique must be improved.

Example 12

This example illustrates the effect of a palladium barrier layer and a ruthenium-iridium intermediate layer, in accordance with the present invention, as oxygen electrodes in various tests.

Composite samples were prepared on roughened and cleaned titanium with layers deposited essentially as described in Example 9, except that samples were prepared with and without a palladium layer and with and without a ruthenium-iridium layer. One sample was prepared with an electrodeposited ruthenium intermediate layer.

Part A

In the rests recorded in Table X—A, Samples 7 and 8 had a thin electroplated deposit of palladium of 0.1 $\mu$m thickness, heat treated at 593°C for 1 hour in 5% $H_2/N_2$.

TABLE IX

| Samples I.D. | Barrier layer conditioning | Intermediate layer conditioning | Surface layer conditioning | performance |
|---|---|---|---|---|
| III—1 | 0.2 μm Pd<br>593°C—1 Hr—5% $H_2$—$N_2$ | 0.5 μm Ru—Ir<br>593°C—15 m—air | 0.7 mg/cm² $RuO_2/TiO_2$<br>453°C—30 m—air | 1.25—1.38V to 3350 Hours<br>2V at 3500 Hours |
| III—2 | 0.1 μm Pd<br>593°C—1 Hr—5% $H_2$—$N_2$ | 1.0 μm Ru—Ir<br>593°C—15 m—air | 0.8 mg/cm² $RuO_2/TiO_2$<br>453°C—30 m—air | 1.28—1.32V to 5600 Hours<br>1.37—1.68V to 8000 Hours<br>2V at 8500 Hours |

Samples 6, 7 and 8 had a surface coating of $RuO_2$ formed from a ruthenium trichloride-containing paint deposit heat treated at 454°C for 30 min. in air. The $RuO_2$ loading was 0.5 mg/cm³. Sample 8 had an intermediate layer between the palladium layer and $RuO_2$ layer of electrodeposited ruthenium-4% iridium. The ruthenium-iridium layer, which is 0.5 μm in thickness was heated at 593°C for 15 minutes in air before the outer $RuO_2$ layer was applied. Samples 6, 7 and 8 were used as anodes in a simulated nickel electrowinning anolyte, as described in Example 9. Data showing the time and anode potential for oxygen evolution are shown in Table X—A.

TABLE X—A

Anode potentials in simulated Ni electrowinning cell operated at 300 A/m² and 70°C

| Time, hrs | Sample 6 Ti/$RuO_2$ | Sample 7 Ti/Pd/$RuO_2$ | Sample 8 Ti/Pd/Ru—Ir/$RuO_2$ |
|---|---|---|---|
| 1 | 1.28 | 1.20 | 1.20 |
| 100 | 1.27 | 1.23 | 1.27 |
| 336 | 2.7 | 1.25 | 1.26 |
| 500 | — | 1.26 | 1.25 |
| 672 | — | 1.28 | 1.25 |
| 1000 | — | 1.30 | 1.26 |
| 1164 | — | +2.0V | 1.27 |
| 2000 | — | — | 1.27 |
| 3000 | — | — | 1.29 |
| 4000 | — | — | 1.37 |
| 4200 | — | — | >2.0V |

The data in Table X—A showed: The electrode composed essentially of $RuO_2$ on Ti (Sample 6) operated at a good potential, but it had a short life as an oxygen electrode. The electrodes having a Pd-barrier layer (Samples 7 and 8) had operating potentials comparable to the $RuO_2$ working potential of Sample 6. The Ru—Ir intermediate layer increased the life of the oxygen electrode (Sample 8 vs. Sample 7), the potentials for Sample 8 being stabilized and low for about 4000 hours, which was roughly 4 times the life of Sample 7 without the Ru—Ir layer. It will be appreciated that, within certain limits, an increase in $RuO_2$ loading in the surface coating (i.e., the working layer) will increase the life of the electrode. The limits in thickness of the coating will be dictated largely by the technique for applying suitable $RuO_2$ coating of the desired thickness and by considerations of cost.

Part B

In the tests recorded in Table X—B, Sample 9 was prepared with a Pd- barrier layer, an electrodeposited Ru-4% IR intermediate layer and an $RuO_2$ surface layer. In Sample 10, the intermediate layer was electroplated Ru. Samples 9 and 10 were tests in a simulated nickel electrowinning anolyte essentially the same as described in Example 9, but operated at 55°C.

TABLE X—B

| Sample | Anode layers on Ti | Time in hours to anode potential of 2 volts |
|---|---|---|
| 9 | 0.1 μm Pd(1)<br>0.5 μm Ru—Ir(2)<br>0.5 mg/cm² $RuO_2$(3) | >8407<br>(Still in Test) |
| 10 | 0.1 μm Pd(1)<br>0.5 μm Ru(2)<br>0.5 mg/cm² $RuO_2$(3) | 264 |

(1) Electroplated Deposit H/T=593°C—1 hr—5% $H_2/N_2$
(2) Electroplated Deposit H/T=593°C—15 min—air
(3) Paint Deposit H/T=454°C—30 min—air

The data in Table X—B show that the addition of iridium in the intermediate layer increases the life of the anode markedly.

Part C

In tests recorded in Table XC, Sample 11 which did not have a barrier layer was compared with

Sample 12, having a barrier layer and therefore in accordance with the invention, as an oxygen electrode under severe conditions, viz in 1N $H_2SO_4$ electrolyte at 5000 A/m$^2$.

TABLE X—C

| Sample | Anode layers on Ti | Time in hours to cell potential of 10 volts |
|---|---|---|
| 11 | 0.5 $\mu$m Ru—Ir(2)<br>1.1 mg/cm$^2$ $RuO_2$(3) | 110 |
| 12 | 0.2 $\mu$m Pd(1)<br>0.5 $\mu$m Ru—Ir(2)<br>1.1 mg/cm$^2$ $RuO_2$(3) | 250 |

(1) Electroplated deposit (no H/T)
(2) Electroplated deposit H/T=593°C—15 min—air
(3) Paint deposit H/T=454°C—30 min—air

The data in Table X—C shows that the palladium barrier layer increases the durability of the anode.

Example 13

This Example illustrates variations in the barrier layer.

Composite anode samples were prepared with a variety of metals electroplated on roughened and cleaned titanium sheet, followed by an electroplated layer of Ru—4% Ir. Data showing the results of tests using such composites as anodes in a simulated nickel electrowinning electrolyte, essentially as described in Example 9, are given in Table XI. The thickness of the various deposits and treatments to which the deposits were subjected (if any) are noted.

TABLE XI

| Sample | Anode layers on Ti | Time in hours to anode potential of 2 volts |
|---|---|---|
| V-1 | 0.1 $\mu$m Pd(1)<br>1.0 $\mu$m Ru—Ir(2) | >8000<br>(Still in Test) |
| V-2 | 0.1 $\mu$m Pt(3)<br>1.1 $\mu$m Ru—Ir(2) | 2230 |
| V-3 | 0.1 $\mu$m Pt(4)<br>1.0 $\mu$m Ru—Ir(2) | 4510 |
| V-4 | 0.07 mg/cm$^2$ Ir (x)<br>1.0 $\mu$m Ru—Ir(2) | >7410<br>(Still in Test) |
| V-5 | None<br>1.0 $\mu$m Ru—Ir(2) | 2136 |
| V-6 | Flash coating Au(x)<br>1.1 $\mu$m Ru—Ir(2) | (>213)* |
| V-7 | None<br>1.0 $\mu$m Ru—Ir(2) | (114)* |

Conditioning treatments:
(1) 593°C—1hr—5% $H_2/N_2$
(2) 593°C—15 min—air
(3) 593°C—1hr—$N_2$
(4) 593°C—1Hr—5% $H_2/N_2$+72 hours room temperature in conc. $HNO_3$.
(x) No Treatment
(*) Under accelerated test in 1N $H_2SO_4$ at current density of 500 mA/cm$^2$ and ambient temperature to 10 volts cell voltage.

The data show that Ir and Pd are particular suitable as barrier layers and that an oxidation treatment improved the effectiveness of the platinum barrier layer. It is noted that the Pd layer in Sample V-1 was treated in a reducing atmosphere; as noted previously this treatment is not necessary for an effective Pd barrier layer. However, platinum generally requires the treatment in an oxidizing medium to be effective. Such platinum treatment is preferably carried out at room temperature.

Example 14
This Example shows the effect of variations in thickness of the Ru—Ir and Pd layers.

Part A—Variations in thickness of Ru—Ir
Composite tri-layer samples, viz Pd/Ru—Ir/$RuO_2$ on Ti, in accordance with the present invention, were prepared in essentially the same manner as described in Example 9, with variations in thickness in the Ru—Ir layer. In the samples prepared the Pd and $RuO_2$ were constant, viz

Pd=0.1 μm, H/T=593°C—1Hr—
5% $H_2/N_2$ or no treatment

$RuO_2$=0.5 mg/cm$^2$, H/T 454°C—
30 min in air.

The data in Table XII record the hours to 2V when tested in the simulated nickel electrowinning anolyte using the conditions noted in Example 9.

TABLE XII

| Sample | Intermediate layer | Time in hours to anode potential of 2 volts |
|---|---|---|
| 13 | Ru—4% Ir=0.5 μm, H/T—593°C—15 min—air | 4200 |
| 14 | Ru—4% Ir=1 μm, H/T—593°C—15 min—air | >9330 (Still in Test) |
| 15 | Ru—4% Ir=2 μm H/T—593°C—15 min—air | >9640 (Still in Test) |
| 16 | Ru—4% Ir=4 μm HT—593°C—15 min—air | 2500 |

The data in Table XII show that electrodes of the present invention operate effectively with the variation in thickness of the Ru—4% Ir coating of from 0.5—4 μm, and the optimum thickness is in the range of about 1—3 μm.

Part B—Variation in thickness of Pd
Anode samples were prepared of electroplated palladium on roughened and cleaned titanium sheet, with the thickness of the Pd-deposit varying from about 0.05 to about 1 μm, i.e., up to about 1.3 mg/cm$^2$ Pd. The samples were tested as oxygen electrodes in 1N $H_2SO_4$ at room temperature. A graph of potentials of the electrodes when operating at a constant current density of 2 mA/cm$^2$ as a function of Pd-loading showed that at a Pd level greater than 0.2 mg/cm$^2$, the surface behaved like pure Pd, an indication that the titanium surface was completely covered with palladium. Below about 0.2 mg/cm$^2$ of palladium, the titanium substrate influence the potential, as evidenced by the rise in potential as the Pd loading decreased below about 0.2 mg/cm$^2$.

Example 15
This Example illustrates the effect of iridium, the effect of an oxidation treatment in the intermediate layer, and the contribution of the $RuO_2$ layers of the present invention in tests as oxygen electrodes. Again, no barrier layer was present in the electrodes but the results are still useful.

Composite samples were prepared, all having an electroplated ruthenium-containing layer with an iridium content varied from 0 up to about 12%. The electroplated layer was deposited directly on roughened and cleaned titanium. Each sample had an electrodeposit of about 1 mg/cm$^2$ loading. Thereafter, with the exception of Samples 24 and 25, each sample was subjected to a treatment at 593°C in air for 15 minutes. Samples 18, 20 and 24 each had a further outer layer of $RuO_2$ (0.8 mg/cm$^2$) developed from a ruthenium-chloride-containing paint, which was subjected to a heat treatment of 450°C for 30 hours in air. Sample 25 was comparable to Sample 21, except that it did not

have an oxidation treatment. The samples were used as anodes in a 1N $H_2SO_4$ electrolyte operated at incremental current densities until a colour change in the electrolyte was observed. White Teflon (Registered Trademark) tape inserted at the stopper for each test was removed and examined. Effluent gas from the test container was bubbled through a solution of 1:5 of $H_2SO_3$:$H_2O$. No noticeable change occurred in the $H_2SO_3$.

The results in Table XIII show:

1) The presence of Ir suppressed the corrosion of Ru. As the iridium content increased from 0 to 3.9 to 9.4% the current density at which colouring of the electrolyte began rising from 30 to 250 mA/cm$^2$, and the deposits of $RuO_2 . 2H_2O$ on the tape decreased from black amounts to trace amounts (Cf Samples 17, 19, 22).

TABLE XIII

| Sample | Anode layers | % Ir | Deposit on teflon coated stopper | Ru in solution g/l (approx.) | Observations on electrolyte |
|---|---|---|---|---|---|
| 17 | Ru | 0 | Black$^{+}$ | 0.18 | Yellowing at 30 $mA/cm^2$ |
| 18 | $Ru+RuO_2$ | 0 | Brown-Black Smudge | 0.43 | Yellowing at 125 $mA/cm^2$ |
| 19 | Ru/Ir | 3.9 | Black | 0.003 | Yellowing at 50 $mA/cm^2$ |
| 20 | $Ru/Ir+RuO_2$ | 3.9 | None | 0.003 | Yellowing at 250 $mA/cm^2$ |
| 21 | Ru/Ir | 6.8 | Trace | 0.003 | Possibly more Red than Yellow at 250 $mA/cm^2$ |
| 22 | Ru/Ir | 9.4 | Trace | 0.003 | Pinking at 250 $mA/cm^2$ |
| 23 | Ru/Ir | 11.3 | Trace | 0.003 | Pinking at 250 $mA/cm^2$ |
| 24 | $Ru/Ir^{*}-RuO_2$ | 9.4 | Trace | 0.007 | Yellowing at 30 $mA/cm^2$ |
| 25 | Ru/Ir* | 6.8 | Black-Brown | 0.0064 | Yellowing at 30 $mA/cm^2$ |

*No oxidation treatment.
Ru=an electroplated layer of Ru.
Ru/Ir=an electroplated layer of Ru—4 Ir.
$RuO_2$=a layer developed from a $RuCl_3$-containing paint.
$^{+}$x-ray fluorescence of a similarly formed deposit showed the presence of ruthenium.

2) The presence of $RuO_2$ developed on the surface from a non-electroplated deposit suppressed the formation of a ruthenium-containing deposit believed to be $RuO_2 . 2H_2O$ (via $RuO_4$ formation) and the corrosion of Ru in all cases. With no Ir present, there was less of a deposit on the tape with a $RuO_2$ surface layer than without it (cf Samples 17 and 18), and corrosion began at a higher current density. In Ru—Ir deposits not heat treated, the ruthenium-containing deposits on the tape were less when $RuO_2$ was present, and the corrosion of Ru was also to a lesser amount (Cf Samples 25 and 24). When the Ru—Ir deposit was heat treated and $RuO_2$ was present, no ruthenium-containing deposit was found at current densities up to about 250 $mA/cm^2$ (Cf Sample 20).

3) Further, the results showed oxidation of the Ru—Ir layer was necessary to form a protective oxide film. When Ru—Ir was not heat treated, corrosion of Ru begain at 30 $mA/cm^2$ and a black-brown deposit was present on the tape. When Ru—Ir was heat treated, corrosion began at much higher current densities, and the volatiles were reduced to trace amounts (Cf Samples 21 and 25).

From the results it can be seen that the optimum amount of iridium in the Ru—Ir can be predetermined for given conditions of operation based upon, e.g., corrosion and economics. For example, the Sample 20 containing about 3.9% iridium and having an $RuO_2$ outer coating may be used at current densities up to 250 $mA/cm^2$ without noticeable dissolution of the ruthenium in the electrolyte. It appears from the data that less than 4% iridium may be used with the $RuO_2$ for lower current densities of the order of 30—50 $mA/cm^2$, e.g., 1% or 2% may be sufficient.

Example 16

This Example illustrates the effect of the iridium level in a ruthenium-iridium layer. Again no barrier layer is present but the results are valid nevertheless.

In the experiments of this Example composite samples composed of a ruthenium-iridium electroplated deposit on roughened and cleaned titanium were tested in an accelerated life test. The ruthenium-iridium deposits contained various amounts from zero up to about 25% iridium (by weight).

Results with typical samples prepared under comparable conditions are reported in Table XIV.

TABLE XIV

| Sample | % Ir | Time in hours to cell potential of 10 volts |
|---|---|---|
| 26 | 0 | 0.3 |
| 27 | 0.7 | 95 |
| 28 | 2 | 105 |
| 29 | 3 | 110 |
| 30 | 6.1 | 114 |
| 31 | 6.3 | 120 |
| 32 | 8.1 | 112 |
| 33 | 9.4 | 118 |
| 34 | 11 | 179 |
| 35 | 21.3 | 426 |

It will be appreciated that the selected results reported in Table XIV are for rough screening tests. Some tests not reported in the table showed poor performance at high levels of iridium and good life at low levels of iridium. However, the life of the electrodes will vary markedly depending on such factors as the type of bath used, plating conditions, thickness of the coating, treatment conditions, integrity of the deposit, etc. It is believed, however, that the results tabulated are for relatively comparable samples and that in general the experiments showed a trend, as indicated.

As noted previously the present anodes are particularly useful for electrowinning nickel but may also be used for a variety of other purposes including recovering nickel-cobalt deposits from a suitable electrolyte under comparable conditions and with suitably low anode potentials, e.g. of the order of about 1.15—1.3 V/SCE.

## Claims

1. An insoluble electrode comprising an electrically conducting substrate, a barrier layer on the substrate and a non-electroplated outer surface layer containing ruthenium dioxide, characterised in that an intermediate layer comprising a ruthenium-iridium electrodeposit which is at least partially oxidised is interposed between the barrier layer and the outer surface layer.

2. An electrode according to claim 1 characterised in that the substrate is a valve metal.

3. An electrode according to claim 2 characterised in that the substrate is titanium.

4. An electrode according to any preceding claim characterised in that the barrier layer is one of the platinum group metals and gold or alloys, mixtures, intermetallics and oxides thereof.

5. An electrode according to any preceding claim characterised in that the outer surface layer contains at least 80% ruthenium dioxide.

6. An electrode according to any preceding claim characterised in that the ruthenium-iridium intermediate layer is produced by co-deposition from a bath comprising an aqueous solution containing a soluble ruthenium compound and a soluble iridium compound.

7. An electrode according to claim 6 characterised in that the ruthenium-iridium layer is electrodeposited from a bath comprising an aqueous solution containing a soluble ruthenium compound, a soluble iridium compound, a soluble fluoborate salt and fluoboric acid.

8. An electrode according to claim 7 characterised in that the ruthenium compound of the bath is a salt containing ruthenium in the form of the complex anion $[Ru_2N(H_2O)_2Y_8]^{3-}$ wherein Y is Cl or Br.

9. An electrode according to claim 7 or claim 8 characterised in that the iridium compound of the bath is one prepared by refluxing a diammonium hexahalo salt of iridium and sulphamic acid in an aqueous environment for a period of time sufficient to permit, after distillation and cooling of the refluxing product, the formation of a precipitate.

10. An electrode according to any preceding claim characterised in that the iridium content of the intermediate layer is from 0.1 to 36%.

11. An electrode according to claim 10 characterised in that the iridium content of the intermediate layer is from 2 to 4%.

12. An electrode according to any preceding claim characterised in that the oxidation of the ruthenium-iridium intermediate layer is effected at 400 to 900°C in an oxidising atmosphere.

13. A process of producing the electrode claimed in claim 1, in which the intermediate layer prior to oxidation is formed by electrodepositing a ruthenium-iridium alloy from a bath comprising an aqueous solution containing a soluble ruthenium compound, a soluble iridium compound, a soluble fluoborate salt and fluoboric acid.

14. A process according to claim 13 characterised in that the ruthenium compound of the bath is a salt containing ruthenium in the form of the complex anion $[Ru_2N(H_2O)_2Y_8]^{3-}$ wherein Y is Cl or Br.

15. A process according to claim 13 or claim 14 characterised in that the iridium compound of the bath is one prepared by refluxing a diammonium hexahalo salt of iridium and sulphamic acid in an aqueous environment for a period of time sufficient to permit, after distillation and cooling of the refluxing product, the formation of a precipitate.

16. A process according to any one of claims 13 to 15, characterised in that the bath contains at least 5 g/l of fluoboric acid.

17. A process according to any one of claims 13 to 16, characterised in that the soluble fluoborate is sodium fluoborate present in an amount of at least 25 g/l.

18. A process according to any one of claims 13 to 17 characterised in that the bath additionally contains sulphamic acid.

19. A process according to any one of claims 13 to 18 characterised in that the pH of the bath is from 0.3 to 1.5.

20. A process according to any one of claims 13 to 19 characterised in that the bath additionally contains boric acid.

21. The use of an electrode in accordance with any one of claims 1 to 12 in a metal electrowinning process.

**Patentansprüche**

1. Eine unlösliche Elektrode, bestehend aus einem elektrisch leitenden Substrat, einer Sperrschicht auf dem Substrat, und einer nicht-elektroplattierten, Rutheniumdioxyd enthaltenden, äußeren Oberflächenschicht, dadurch gekennzeichnet, daß eine aus einem zumindest teilweise oxydierten, galvanischen Rutheniumiridium-Überzug bestehende Zwischenschicht zwischen der Sperrschicht und der äußeren Oberflächenschicht eingefügt ist.

2. Eine Elektrode nach Anspruch 1, dadurch gekennzeichnet, daß das Substrat ein Ventilmetall ist.

3. Eine Elektrode nach Anspruch 2, dadurch gekennzeichnet, daß das Substrat Titan ist.

4. Eine Elektrode nach einem der vorhergehenden Ansprüche, dadurch gekenzeichnet, daß die Sperrschicht ein Metall der Platingruppe und Gold oder Legierungen, Mischungen, intermetallische Verbindungen und Oxyde davon ist.

5. Eine Elektrode nach einem der vorhergehenden Ansprüche, dadurch gekennzeichnet, daß die äußere Oberflächenschicht mindestens 80% Rutheniumdioxyd enthält.

6. Eine Elektrode nach einem der vorhergehenden Ansprüche, dadurch gekennzeichnet, daß die Ruthenium-iridium-Zwischenschichtdurch gleichzeitiges Niederschlagen von einem Bad hergestellt wird, das aus einer wässerigen Lössung besteht, die eine Lösliche Rutheniumverbindung und eine lösliche Iridiumverbindung enthält.

7. Eine Elektrode nach Anspruch 6, dadurch gekennzeichnet, daß die Rutheniumiridium-Schicht von einem Bad galvanisiert wird, das eine wässerige Lösung umfaßt, die eine lösliche Rutheniumverbindung, eine lösliche Iridiumverbindung, ein lösliches Fluorborsäuresalz und Fluorborsäure enthält.

8. Eine Elektrode nach Anspruch 7, dadurch gekennzeichnet, daß die Rutheniumverbindung in

dem Bad ein Salz ist, das Ruthenium in Form des Komplexanions $[Ru_2N(H_2O)_2Y_8]^{3-}$ enthält, worin Y=Cl oder Br ist.

9. Eine Elektrode nach Anspruch 7 oder 8, dadurch gekennzeichnet, daß die Iridiumverbindung des Bades eine solche ist, die durch Zurückstömen eines zweibasischen Ammoniumhexahalosalzes von Iridium und Sulfamidsäure in einer wässerigen Umgebung für einen Zeitraum zubereitet wurde, der ausreicht, um nach der Destillation und Abkühlung des Rückströmungsproduktes die Bildung eines Präzipitats zu ermöglichen.

10. Eine Elektrode nach einem der vorhergehenden Ansprüche, dadurch gekennzeichnet, daß der Iridiumgehalt der Zwischenschicht von 0,1 bis 36% beträgt.

11. Eine Elektrode nach Anspruch 10, dadurch gekennzeichnet, daß der Iridiumgehalt der Zwischenschicht von 2 bis 4% beträgt.

12. Eine Elektrode nach einem der vorhergehenden Ansprüche, dadurch gekennzeichnet, daß die Oxydation der Rutheniumiridium-Zwischenschicht bei 400 bis 900°C in einer oxydierenden Atmosphäre stattfindet.

13. Ein Verfahren der Herstellung der in Anspruch 1 beanspruchten Elektrode, in der die Zwischenschicht vor der Oxydation durch Galvanisierung einer Rutheniumiridium-Legierung von einem Bad gebildet wird, das aus einer wässerigen Lösung besteht, die eine lösliche Rutheniumverbindung, eine lösliche Iridiumverbindung, ein lösliches Fluorborsäuresalz und Fluoborsäure enthält.

14. Ein Verfahren nach Anspruch 13, dadurch gekennzeichnet, daß die Rutheniumverbindung des Bades ein Salz ist, das Ruthenium in Form des Komplexanions $[Ru_2N(H_2O)_2Y_8]^{3-}$ enthält, worin Y=Cl oder Br ist.

15. Ein Verfahren nach Anspruch 13 oder 14, dadurch gekennzeichnet, daß die Iridiumverbindung des Bades eine solche ist, die durch Zurückströmen eines zweibasischen Ammoniumhexahalosalzes von Iridium und Sulfamidsäure in einer wässerigen Umgebung für einen Zeitraum zubereitet wurde, der ausreicht, um nach der Destillation und Abkühlung des Rückströmungsproduktes die Bildung eines Präzipitats zu ermöglichen.

16. Ein Verfahren nach einem der Ansprüche 13 bis 15, dadurch gekennzeichnet, daß das Bad mindestens 5 g/l Fluorborsäure enthält.

17. Ein Verfahren nach einem der Ansprüche 13 bis 16, dadurch gekennzeichnet, daß das lösliche Fluoborsäuresalz Natriumfluorborsäuresalz in einer Menge von mindestens 25 g/l ist.

18. Ein Verfahren nach einem der Ansprüche 13 bis 17, dadurch gekennzeichnet, daß das Bad zusätzlich Sulfamidsäure enthält.

19. Ein Verfahren nach einem der Ansprüche 13 bis 18, dadurch gekennzeichnet, daß der pH-Wert des Bades von 0,3 bis 1,5 beträgt.

20. Ein Verfahren nach einem der Ansprüche 13 bis 19, dadurch gekennzeichnet, daß das Bad zusàtzlich Borsäure enthält.

21. Die Benutzung einer Elektrode nach einem der Ansprüche 1 bis 12 in einem Elektrometallurgie-Verfahren.

## Revendications

1. Une électrode insoluble comprenant un substrat électriquement conducteur, une couche formant barrière sur le substrat et une couche de surface extérieure appliquée de manière non-électrolytique contenant du bioxyde de ruthénium, caractérisée en ce qu'une couche intermédiaire comprenant un dépôt formé électrolytiquement de ruthénium-iridium qui est au moins partiellement oxydé est interposée entre la couche formant barrière et la couche de surface extérieure.

2. Une électrode selon la revendication 1, caractérisée en ce que le substrat est un métal valve.

3. Une électrode selon la revendication 2, caractérisée en ce que le substrat est du titane.

4. Une électrode selon l'une quelconque des revendications précédentes, caractérisée en ce que la couche formant barrière est choisie parmi les métaux du groupe du platine et l'or ou leurs alliages, mélanges, composés intermétalliques et oxydes.

5. Une électrode selon l'une quelconque des revendications précédentes, caractérisée en ce que la couche de surface extérieure contient au moins 80 % de bioxyde de ruthénium.

6. Une électrode selon l'une quelconque des revendications précédentes, caractérisée en ce que la couche intermédiaire de ruthénium-iridium est produite par dépôt simultané à partir d'un bain comprenant une solution aqueuse contenant un composé soluble du ruthénium et un composé soluble de l'iridium.

7. Une électrode selon la revendication 6, caractérisée en ce que la couche de ruthénium-iridium est déposée électrolytiquement à partir d'un bain comprenant une solution aqueuse contenant un composé soluble du ruthénium, un composé soluble de l'iridium, un fluoborate soluble et de l'acide fluoborique.

8. Une électrode selon la revendication 7, caractérisée en ce que le composé du ruthènium du bain est un sel contenant du ruthénium sous la forme de l'anion complexe $[Ru_2N(H_2O)_2Y_8]^{3-}$ où Y est Cl ou Br.

9. Une électrode selon l'une des revendications 7 et 8, caractérisée en ce que le composé de

l'iridium du bain est un composé préparé en chauffant au reflux un sel diammonio-hexahalo d'iridium et de l'acide sulfamique dans un environnement aqueux pendant un laps de temps suffisant pour permettre, après distillation et refroidissement du produit chauffé au reflux, la formation d'un précipité.

10. Une électrode selon l'une quelconque des revendications précédentes, caractérisée en ce que la teneur en iridium de la couche intermédiaire est comprise entre 0,1 et 36 %.

11. Une électrode selon la revendication 10, caractérisée en ce que la teneur en iridium de la couche intermédiaire est comprise entre 2 et 4 %.

12. Une électrode selon l'une quelconque des revendications précédentes, caractérisée en ce que l'oxydation de la couche intermédiaire de ruthénium-iridium est effectuée entre 400 et 900°C dans une atmosphère oxydante.

13. Un procédé de production de l'électrode revendiquée dans la revendication 1, selon lequel la couche intermédiaire avant oxydation est formée par électrodéposition d'un alliage ruthénium-iridium à partir d'un bain comprenant une solution aqueuse contenant une composé soluble du ruthénium, un composé soluble de l'iridium, un fluoborate soluble et de l'acide fluoborique.

14. Un procédé selon la revendication 13, caractérisé en ce que le composé du ruthénium du bain est un sel contenant du ruthénium sous la forme de l'anion complexe $[Ru_2N(H_2O)_2Y_8]^{3-}$ où Y est Cl ou Br.

15. Un procédé selon l'une des revendications 13 et 14, caractérisé en ce que le composé de l'iridium du bain est un composé préparé en chauffant au reflux un sel diammonio-hexahalo d'iridium et de l'acide sulfamique dans un environnement aqueux pendant un laps de temps suffisant pour permettre, après distillation et refroidissement du produit chauffé au reflux, la formation d'un précipité.

16. Un procédé selon l'une quelconque des revendications 13 à 15, caractérisé en ce que le bain contient au moins 5 g/l d'acide fluoborique.

17. Un procédé selon l'une quelconque des revendications 13 à 16, caractérisé en ce que le fluoborate soluble est du fluoborate de sodium présent à raison d'au moins 25 g/l.

18. Un procédé selon l'une quelconque des revendications 13 à 17, caractérisé en ce que le bain contient en outre de l'acide sulfamique.

19. Un procédé selon l'une quelconque des revendications 13 à 18, caractérisé en ce que le pH du bain est compris entre 0,3 et 1,5.

20. Un procédé selon l'une quelconque des revendications 13 à 19, caractérisé en ce que le bain contient en outre de l'acide borique.

21. L'utilisation d'une électrode selon l'une quelconque des revendications 1 à 12 dans un procédé d'extraction électrolytique de métal.